(19) **Europäisches Patentamt / European Patent Office / Office européen des brevets**

(11) **EP 3 496 320 B1**

(12) **EUROPEAN PATENT SPECIFICATION**

(45) Date of publication and mention
of the grant of the patent:
**16.02.2022 Bulletin 2022/07**

(21) Application number: **17842930.4**

(22) Date of filing: **23.08.2017**

(51) International Patent Classification (IPC):
**H04L 5/00** *(2006.01)*

(52) Cooperative Patent Classification (CPC):
**H04L 5/0035; H04L 5/0051; H04L 5/0062;
H04L 5/0073; H04L 5/0094**

(86) International application number:
**PCT/CN2017/098612**

(87) International publication number:
**WO 2018/036508 (01.03.2018 Gazette 2018/09)**

(54) **SIGNAL TRANSMISSION METHOD AND DEVICE**

SIGNALÜBERTRAGUNGSVERFAHREN UND -VORRICHTUNG

DISPOSITIF ET PROCÉDÉ DE TRANSMISSION DE SIGNAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.08.2016 CN 201610726705**

(43) Date of publication of application:
**12.06.2019 Bulletin 2019/24**

(73) Proprietor: **Huawei Technologies Co., Ltd.
Longgang District
Shenzhen, Guangdong 518129 (CN)**

(72) Inventors:
• **WANG, Ting
Shenzhen
Guangdong 518129 (CN)**

• **LI, Yuanjie
Shenzhen
Guangdong 518129 (CN)**

(74) Representative: **Pfenning, Meinig & Partner mbB
Patent- und Rechtsanwälte
Theresienhöhe 11a
80339 München (DE)**

(56) References cited:
EP-A1- 2 950 599      CN-A- 102 158 964
CN-A- 102 427 396     CN-A- 103 906 176
CN-A- 104 244 415     US-A1- 2011 098 054
US-A1- 2016 036 571   US-A1- 2016 182 166

**Description**

This application claims priority to Chinese Patent Application No. 201610726705.0, filed with the Chinese Patent Office on August 25, 2016 and entitled "SIGNAL TRANSMISSION METHOD AND APPARATUS".

**TECHNICAL FIELD**

Embodiments of this application relate to communications technologies, and in particular, to a signal transmission method and apparatus.

**BACKGROUND**

As users have increasingly high requirements on communication, coordinated multipoint transmission/reception (Coordinated Multipoint Transmission and Reception, CoMP for short) is introduced in a Long Term Evolution Advanced (Long Term Evolution Advanced, LTE-Advanced for short) system. The CoMP means that a plurality of transmission points in different geographical locations participate in data transmission of one user equipment through coordination or jointly receive data sent by one user equipment. The participating in data transmission of one user equipment through coordination includes a plurality of scenarios, for example: simultaneously transmitting data for one user equipment by a plurality of transmission points; or dynamic point selection, that is, a plurality of transmission points perform coordinated scheduling, and finally one of the plurality of transmission points is selected to transmit data for the user equipment; or coordinated scheduling or coordinated beamforming, that is, a plurality of transmission points reduce interference between the transmission points through coordinated scheduling or coordinated beamforming. This improves overall system performance. The joint reception means that a plurality of transmission points simultaneously receive uplink data of the user equipment, and then the uplink data received by the transmission points are combined, to improve performance of uplink data transmission.

To perform selective frequency scheduling on a link, CoMP user equipment needs to separately send a sounding reference signal (Sounding Reference Signal, SRS for short) to the plurality of transmission points, to detect channel quality. In this case, a base station to which the plurality of transmission points belong needs to separately perform SRS resource configuration for the CoMP user equipment. Consequently, resource waste is caused. In addition, because the CoMP user equipment separately sends an SRS to the plurality of transmission points, a delay in obtaining channel quality is caused. Prior art document EP 2 950 599 discloses a method for coordination between base stations, including acquiring by a first base station, resource configuration information of a first cell, receiving resource configuration information of a second cell sent by a second base station, and allocating a resource to user equipment according to the resource configuration information of the first cell and the second cell.

**SUMMARY**

Embodiments of this application provide a signal transmission method and apparatus, so as to save resources during selective frequency scheduling and reduce a delay in obtaining channel quality.

According to a first aspect, an embodiment of this application provides a signal transmission method, according to claim 1.

According to a second aspect, an embodiment of this application provides a signal transmission method, according to claim 5.

According to a third aspect, an embodiment of this application provides a signal transmission apparatus, according to claim 9.

According to a fourth aspect, an embodiment of this application provides a computer readable storage medium, according to claim 10.

In a possible design, the signal transmission apparatus includes one or more processors and a communications unit. The one or more processors are configured to support the signal transmission apparatus in executing a corresponding function in the foregoing method. The communications unit is configured to support the signal transmission apparatus in communicating with another device, to implement a reception and/or sending function.

Optionally, the signal transmission apparatus may further include one or more memories. The memory is coupled to the processor, and the memory stores a necessary program instruction and necessary data of the signal transmission apparatus. The one or more memories may be integrated with the processor, or may be separated from the processor. This is not limited in this application.

The signal transmission apparatus may be a base station, a TRP, or the like, and the communications unit may be a transceiver or a transceiver circuit.

Alternatively, the signal transmission apparatus may be a communications chip, and may be disposed in a base station or a TRP. The communications unit may be an input/output circuit or an input/output interface of the communications chip.

Alternatively, the signal transmission apparatus may be an intelligent terminal, a wearable device, or the like, and the communications unit may be a transceiver or a transceiver circuit.

Alternatively, the signal transmission apparatus may be a communications chip, and may be disposed in user equipment. The communications unit may be an input/output circuit or an input/output interface of the communications chip.

These aspects and another aspect of this application will be clearer and easier to understand based on descriptions of the following (a plurality of) embodiments.

## BRIEF DESCRIPTION OF DRAWINGS

To describe technical solutions in embodiments of this application or the prior art more clearly, the following briefly describes the accompanying drawings required for describing the embodiments.

FIG. 1 is a signaling interaction diagram of Embodiment 1 of a signal transmission method according to this application;
FIG. 2 is a schematic diagram when reference signal resource location information is pattern information according to an embodiment of this application;
FIG. 3 is a schematic diagram of mapping a symbol of an SRS;
FIG. 4 is a schematic structural diagram of Embodiment 1 of a signal transmission apparatus according to this application;
FIG. 5 is a schematic structural diagram of Embodiment 2 of a signal transmission apparatus according to this application;
FIG. 6 is a schematic structural diagram of Embodiment 3 of a signal transmission apparatus according to this application;
FIG. 7 is a schematic structural diagram of Embodiment 4 of a signal transmission apparatus according to this application;
FIG. 8 is a schematic structural diagram of Embodiment 5 of a signal transmission apparatus according to this application; and
FIG. 9 is a schematic structural diagram of Embodiment 6 of a signal transmission apparatus according to this application.

## DESCRIPTION OF EMBODIMENTS

In the specification and claims of the embodiments of this application, the terms "first", "second", and the like are intended to distinguish between similar objects, but are unnecessarily intended to describe a particular order or sequence. It should be understood that the data termed in such a way is interchangeable in proper circumstances so that the embodiments of this application described herein can be, for example, implemented in other orders than the order illustrated or described herein. In addition, the terms "include", "contain", and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device.

A next-generation mobile communications system requires large-capacity and high-quality data transmission. A multiple input multiple output (Multiple Input Multiple Output, MIMO for short) technology is considered as one of key technologies that can implement future high-speed data transmission. A plurality of transmit antennas of a conventional centralized MIMO system are all centered at a base station (Base Station, BS for short) end. Different from the centralized MIMO system, a plurality of transmit antennas of a distributed MIMO system are distributed at different geographical locations, and each pair of transmit and receive links of the distributed MIMO system are more independent of each other. Therefore, the distributed MIMO system has advantages such as a large capacity, low power consumption, better coverage, and low electromagnetic damage to a human body, and is considered as one of candidate solutions of a future wireless communications system.

In the distributed MIMO system, to improve signal reliability of edge user equipment and a throughput of an edge cell, use of a transmission method with a plurality of transmission points and a plurality of data streams may be considered. Specifically, a base station may obtain channel quality of each transmission point in a manner of receiving an SRS sent by user equipment. However, for a plurality of transmission points, the user equipment needs to repeatedly send the SRS. Consequently, resource waste and a delay in obtaining channel quality are caused.

For the foregoing problem, the embodiments of this application provide a signal transmission method and apparatus, to implement coordinated transmission of a reference signal, for example, an SRS, by exchanging reference signal configuration information between devices, for example, base stations, so that a delay in obtaining channel quality is reduced while resources are reduced.

For an application scenario, the embodiments of this application may be applied to a time division duplex (Time Division Duplex, TDD for short) system and a frequency division duplex (Frequency Division Duplex, FDD for short) system. The embodiments of this application may be applied to a single-carrier system and a multicarrier system. The embodiments of this application may be applied to a high-frequency (higher than a frequency band of 6 GHz) communications system and a low-frequency (lower than a frequency band of 6 GHz) communications system.

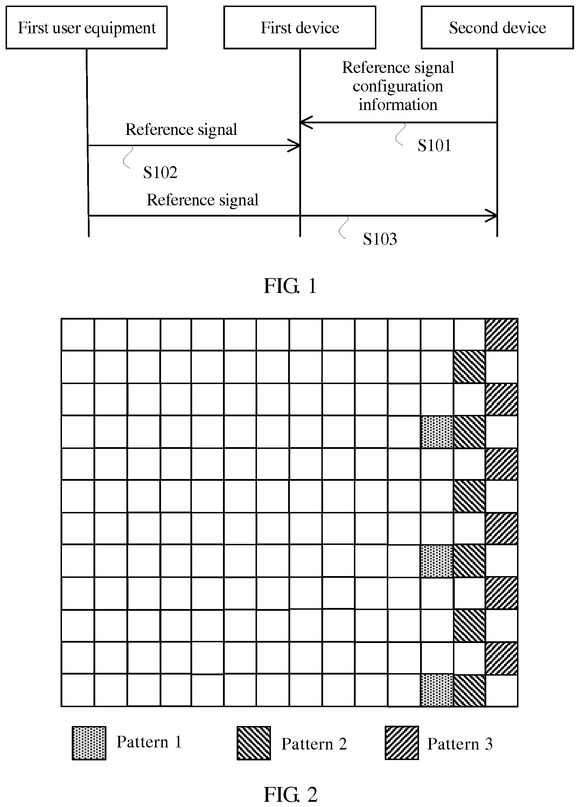

FIG. 1 is a signaling interaction diagram of Embodiment 1 of a signal transmission method according to this application. As shown in FIG. 1, the signal transmission method includes the following steps.

S101: A first device receives reference signal configuration information sent by a second device.

Correspondingly, the second device sends the reference signal configuration information to the first device.

To enable the first device and the second device to simultaneously receive a reference signal subsequently sent by coordinated transmission user equipment, the second device needs to notify reference signal configuration information of the coordinated transmission user equipment to the first device.

The first device and the second device may be specifically a first base station and a second base station, respectively. However, this embodiment of this application is not limited thereto.

The reference signal configuration information includes reference signal resource location information and/or a reference signal sequence parameter, the reference signal resource location information is used to indicate a time domain resource and/or a frequency domain resource for transmitting a reference signal, and the reference signal sequence parameter includes all or some parameters required for generating a reference signal sequence. For details, refer to descriptions about the reference signal sequence in the prior art. Details are not described herein again. The reference signal is used to detect channel quality. In other words, the reference signal configuration information may include the reference signal resource location information; or the reference signal configuration information may include the reference signal sequence parameter; or the reference signal configuration information may include the reference signal resource location information and the reference signal sequence parameter.

Content included in the reference signal configuration information may be set according to an actual requirement. When the reference signal configuration information includes only the reference signal resource location information, a person skilled in the art may understand that the first device and the second device have negotiated a reference signal sequence parameter corresponding to the reference signal resource location information included in the reference signal configuration information. Likewise, when the reference signal configuration information includes only the reference signal sequence parameter, a person skilled in the art may understand that the first device and the second device have negotiated reference signal resource location information corresponding to the reference signal sequence parameter included in the reference signal configuration information. Alternatively, a correspondence between the reference signal sequence parameter and the reference signal resource location information has been configured for the first device.

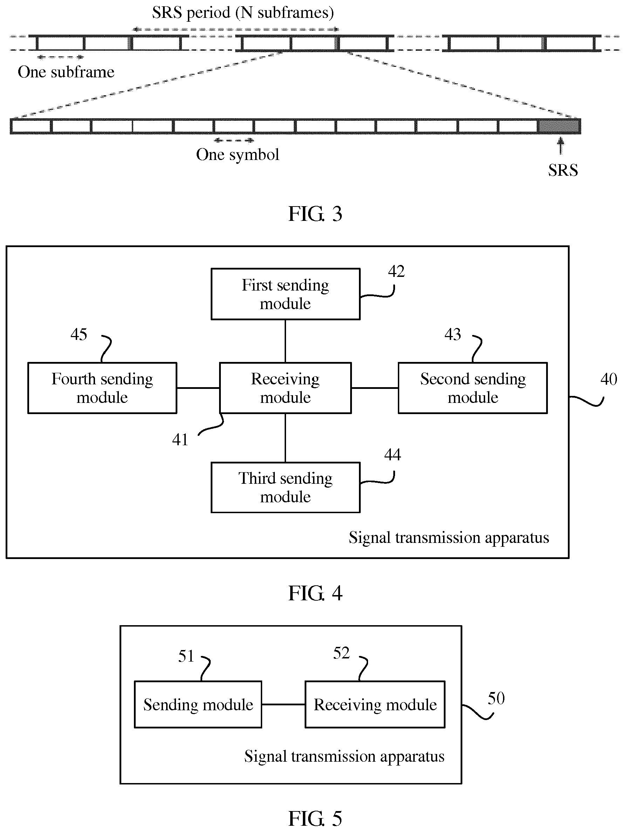

In the solution, the reference signal resource location information may be specifically pattern information of the reference signal on the time domain resource or the frequency domain resource. For example, as shown in FIG. 2, a pattern 1, a pattern 2, and a pattern 3 are three possible SRS resource location distributions. In this case, a specific subframe location of the reference signal resource location information may be defined by a protocol, or may be user-defined. This is not limited in this embodiment of this application. In addition, alternatively, the reference signal resource location information may be specifically time domain resource information and/or frequency domain resource information, and the time domain resource information includes at least subframe location information and/or symbol location information. If the reference signal subsequently sent by the coordinated transmission user equipment occupies a full-bandwidth frequency domain resource, the reference signal resource location information may include only the time domain resource information, such as the subframe location information, the symbol location information, or the subframe location information and the symbol location information. If the reference signal subsequently sent by the coordinated transmission user equipment is sent only on a fixed preset quantity of symbol locations, the reference signal resource location information may include only the frequency domain resource information. For example, in an existing Long Term Evolution (Long Term Evolution, LTE for short) system, an SRS is transmitted only on one or more last symbols of an uplink subframe or a special subframe, shown in FIG. 3. The special subframe (special subframe) is a subframe used for uplink-downlink transition in a TDD system, and the special subframe includes three parts: a downlink part (the downlink part of the special subframe, DwPTS for short), a guard period (guard period, GP for short), and an uplink part (the uplink part of the special subframe, UpPTS for short).

Optionally, the reference signal configuration information may further include power information, and the power information is used to indicate a preset power value or power calculation information. The preset power value is a preset power value of the reference signal. The power calculation information is preset calculation information used to determine power of the reference signal.

For example, for a serving cell $C$, a transmit power $P_{SRS}$ at which user equipment sends an SRS in a subframe i is defined as follows:

$$P_{\mathrm{SRS},c}(i) = \min\left\{ P_{\mathrm{CMAX},c}(i),\ P_{\mathrm{SRS\_OFFSET},c}(m) + 10\log_{10}(M_{\mathrm{SRS},c}) + P_{\mathrm{O\_PUSCH},c}(j) + \alpha_c(j)\cdot PL_c + f_c(i) \right\},$$

where

a unit of $P_{\mathrm{SRS},c}(i)$ is dBm;

$P_{\mathrm{CMAX},c}(i)$ is a configured transmit power of the user equipment in the subframe i of the serving cell $C$;

for $P_{\mathrm{SRS\_OFFSET},c}(m)$, values of m = 0 and m = 1 for the serving cell $C$ are semi-statically configured by using higher layer signaling; for SRS transmission (periodic SRS transmission) with a trigger type 0, m = 0; and for SRS transmission (aperiodic SRS transmission) with a trigger type 1, m = 1;

$M_{\mathrm{SRS},c}$ is a bandwidth for SRS transmission performed in the subframe i of the serving cell $C$, and denotes a quantity of resource blocks;

$f_c(i)$ is a power control and modulation status of a current PUSCH of the serving cell $C$; and

values of $P_{\mathrm{O\_PUSCH},c}(j)$ and $\alpha_c(j)$ are as follows when $j=1$:

$$P_{\mathrm{O\_PUSCH},c}(1) = P_{\mathrm{O\_UE\_PUSCH},c,2}(1) + P_{\mathrm{O\_NOMINAL\_PUSCH},c,2}(1),$$

where $P_{\mathrm{O\_UE\_PUSCH},c,2}(1)$ and $P_{\mathrm{O\_NOMINAL\_PUSCH},c,2}(1)$ are provided by using higher layer parameters p0-UE-PUSCH-SubframeSet2-r12 and p0-NominalPUSCH-SubframeSet2-r12;and

$\alpha_c(j) = \alpha_{c,2} \in \{0,\ 0.4,\ 0.5,\ 0.6,\ 0.7,\ 0.8,\ 0.9,\ 1\}$, where $\alpha_{c,2}$ is provided by using a higher layer parameter alpha-SubframeSet2-r12.

When the first device and the second device coordinate to participate in data transmission of first user equipment, that is, the first user equipment is in CoMP, the first user equipment generates and sends, based on the reference signal configuration information, the reference signal corresponding to the reference signal configuration information. For example, the first user equipment determines, based on the power information included in the reference signal configuration information, power of the reference signal corresponding to the reference signal configuration information. After learning the power information included in the reference signal configuration information, the first device may better measure a channel status based on the SRS.

S102: The first device receives the reference signal that is corresponding to the reference signal configuration information and that is sent by the first user equipment.

S103: The second device receives, based on the reference signal configuration information, the reference signal that is corresponding to the reference signal configuration information and that is sent by the first user equipment.

Specifically, the first device configures or schedules transmission of the reference signal of the user equipment based on the reference signal configuration information received by the first device, and receives the reference signal sent by the CoMP user equipment (namely, the first user equipment). The second device configures the reference signal configuration information for the CoMP user equipment, and receives, based on the reference signal configuration information, the reference signal sent by the CoMP user equipment.

After the first user equipment corresponding to the reference signal configuration information sends the reference signal, the first device and the second device receive the reference signal. The first device and the second device may obtain, by receiving the reference signal, a channel feature of the first user equipment that sends the reference signal, so as to determine whether to perform data transmission with the first user equipment or determine a specific scheduling policy for performing data transmission with the first user equipment. The scheduling policy includes joint transmission, dynamic point selection transmission, transport layer quantity selection, precoding selection, modulation and coding selection, time/frequency resource location selection, or the like.

In the signal transmission method in this embodiment of this application, the first device exchanges the reference signal configuration information with the second device, to implement coordinated transmission of the reference signal (for example, the SRS) sent by the CoMP user equipment, so that the first device and the second device do not need to separately configure, for the CoMP user equipment, a resource used to transmit the reference signal. This saves resources. In addition, the CoMP user equipment sends a same reference signal to a plurality of devices (including the first device and the second device), so as to reduce delays in obtaining channel quality by different devices, and improve performance of coordinated transmission.

Based on the foregoing embodiment, in an implementation, the reference signal configuration information may be the reference signal configuration information of the CoMP user equipment. In this case, that the first device receives the reference signal that is corresponding to the reference signal configuration information and that is sent by the first user equipment may include: receiving, by the first device based on the reference signal configuration information, the reference signal sent by the CoMP user equipment.

In another implementation, the reference signal configuration information may be reference signal configuration information of any user equipment served by the second device. In this case, after the first device receives the reference signal configuration information sent by the second device, the first device needs to determine whether the first user equipment corresponding to the reference signal configuration information is the CoMP user equipment. If it is determined that the first user equipment corresponding to the reference signal configuration information is the CoMP user equipment, the first device receives the reference signal that is corresponding to the reference signal configuration information and that is sent by the first user equipment; or if it is determined that the first user equipment corresponding to the reference signal configuration information is not the CoMP user equipment, the first device ignores the reference signal configuration information, and does not perform any subsequent processing.

That the first device configures or schedules transmission of the reference signal of the user equipment based on the reference signal configuration information is described below in detail by using several specific embodiments.

In a first specific embodiment, after the first device receives the reference signal configuration information sent by the second device, the signal transmission method may further include: sending, by the first device, first control information to second user equipment for which a physical uplink shared channel (Physical Uplink Shared Channel, PUSCH for short) is configured on the reference signal resource location information.

A reference signal of the second user equipment is not configured on the reference signal resource location information, and the PUSCH of the second user equipment is configured on the reference signal resource location information. The first control information may include first indication information, and the first indication information is used to indicate the resource location information in the reference signal configuration information, or the first indication information is used to indicate that the reference signal resource location information is not used to transmit the PUSCH of the second user equipment.

When the first indication information is used to indicate the resource location information in the reference signal configuration information, the second user equipment may indirectly determine, based on a presetting (for example, stipulation in a protocol), that a resource location indicated by the first indication information is not used to transmit the PUSCH of the second user equipment; or when the first indication information is used to indicate that the reference signal resource location information is not used to transmit the PUSCH of the second user equipment, the second user equipment may determine, in a direct form, that the resource location indicated by the first indication information is not used to transmit the PUSCH of the second user equipment. The direct form such as a specific indication or a dedicated indication is used, so that the second user equipment determines that the resource location indicated by the first indication information is not used to transmit the PUSCH of the second user equipment.

In this embodiment, the first device does not configure the reference signal for the second user equipment on the reference signal resource location information, but the first device configures the PUSCH for the second user equipment on the reference signal resource location information. Therefore, the first device needs to instruct the second user equipment, for which the PUSCH is configured on the reference signal resource location information, not to transmit the PUSCH on the reference signal resource location information. In this way, a conflict with transmission of the reference signal corresponding to the reference signal configuration information can be avoided.

Correspondingly, the second user equipment receives the first control information sent by the first device, and sends the PUSCH based on the first control information. The second user equipment may send the PUSCH based on the first control information in the following two specific implementations:

In an implementation 1, the PUSCH of the second user equipment is punctured at a resource location indicated by the reference signal resource location information. Specifically, the second user equipment maps the PUSCH to a configured resource corresponding to the PUSCH. The second user equipment punctures the PUSCH of the second user equipment at a resource location at which the configured resource corresponding to the PUSCH overlaps the resource location indicated by the reference signal resource location information. The second user equipment sends a PUSCH on which puncturing processing has been performed.

In an implementation 2, rate matching is performed on the PUSCH of the second user equipment on a resource other than a resource location indicated by the reference signal resource location information. Specifically, the second user equipment removes, from a configured resource corresponding to the PUSCH, a resource overlapping the resource location indicated by the reference signal resource location information, to obtain a second target resource corresponding to the PUSCH; the second user equipment maps the PUSCH to the second target resource; and the user equipment sends the PUSCH.

Selection of the foregoing two implementations may be predefined by a protocol, or may be indicated by the first control information, or may be indicated by other information. This is not limited in this embodiment of this application.

In a second specific embodiment, after the first device receives the reference signal configuration information sent by the second device, the signal transmission method may further include: sending, by the first device, second control information to fifth user equipment for which a reference signal is configured on the reference signal resource location information.

The second control information is used to indicate that the fifth user equipment for which the reference signal is configured on the reference signal resource location information sends a first reference signal, and the first reference signal is orthogonal to the reference signal corresponding to the reference signal resource location information.

In this embodiment, the first device configures the reference signal for the fifth user equipment on the reference signal resource location information. Therefore, the first device needs to instruct the fifth user equipment, for which the reference signal is configured on the reference signal resource location information, to transmit, on the reference signal resource location information, the first reference signal orthogonal to the reference signal sequence indicated by the reference signal sequence parameter, to avoid interference to transmission of the reference signal corresponding to the reference signal resource location information.

Correspondingly, the fifth user equipment receives the second control information sent by the first device, and sends the first reference signal based on the second control information. That the fifth user equipment sends the first reference signal based on the second control information may include: sending, by the fifth user equipment, the first reference signal on a resource indicated by the reference signal resource location information in the reference signal configuration information.

In a third specific embodiment, after the first device receives the reference signal configuration information sent by the second device, the signal transmission method may further include: sending, by the first device, third control information to third user equipment for which a reference signal is configured on the resource location information in the reference signal configuration information.

The third control information is used to indicate that the third user equipment for which the reference signal is configured on the reference signal resource location information does not send the reference signal.

As understood by a person skilled in the art, that the third user equipment does not send the reference signal only represents that a resource location indicated by the reference signal resource location information is not used to send the reference signal at a moment, but the resource location indicated by the reference signal resource location information is still used to send the reference signal as usual at another moment. This does not interfere with communication of the third user equipment. In addition, if the third user equipment does not send the reference signal at the current resource location indicated by the reference signal resource location information, after the third user equipment sends, at a next moment, the reference signal corresponding to the reference signal configuration information, a base station may then schedule the third user equipment to send the reference signal.

In this embodiment, the first device configures the reference signal for the third user equipment on the reference signal resource location information. Therefore, the first device needs to instruct the third user equipment, for which the reference signal is configured on the reference signal resource location information, not to send the reference signal on the reference signal resource location information, to avoid interference to transmission of the reference signal corresponding to the reference signal resource location information.

Correspondingly, the third user equipment receives the third control information sent by the first device, and determines that the reference signal is not sent on the reference signal resource location information.

In a fourth specific embodiment, after the first device receives the reference signal configuration information sent by the second device, the signal transmission method may further include: sending, by the first device, fourth control information to fourth user equipment for which a physical downlink shared channel (Physical Downlink Shared Channel, PDSCH for short) is configured on the reference signal resource location information.

A reference signal of the fourth user equipment is not configured on the reference signal resource location information, and the PDSCH of the fourth user equipment is configured on the reference signal resource location information. The fourth control information includes second indication information, and the second indication information is used to indicate that the reference signal resource location information is not used to receive the PDSCH of the fourth user equipment.

In this embodiment, the first device does not configure the reference signal for the fourth user equipment on the reference signal resource location information, but the first device configures the PDSCH for the fourth user equipment on the reference signal resource location information. Therefore, the first device needs to notify the fourth user equipment for which the PDSCH is configured on the reference signal resource location information that the reference signal resource location information is not used to receive the PDSCH of the user equipment, so that on one hand, a conflict with transmission of the reference signal corresponding to the reference signal configuration information is avoided, and on the other hand, accuracy of receiving the PDSCH of the fourth user equipment is ensured.

Optionally, after the sending, by the first device, fourth control information to fourth user equipment for which a PDSCH is configured on the reference signal resource location information, the signal transmission method may further include: mapping, by the first device, the PDSCH to a configured resource corresponding to the PDSCH; puncturing, by the first device, the PDSCH at a resource location at which the configured resource corresponding to the PDSCH overlaps a resource location indicated by the reference signal resource location information; and sending, by the first device, a PDSCH on which puncturing processing has been performed. In other words, the first device performs puncturing at the resource location indicated by the reference signal resource location information, to send the PDSCH.

Alternatively, after the sending, by the first device, fourth control information to fourth user equipment for which a PDSCH is configured on the reference signal resource location information, the signal transmission method may further include: removing, by the first device from a configured resource corresponding to the PDSCH, a resource overlapping a resource location indicated by the reference signal resource location information, to obtain a first target resource corresponding to the PDSCH; mapping, by the first device, the PDSCH to the first target resource; and sending, by the first device, the PDSCH. In other words, the first device performs rate matching on the PDSCH on a resource other than the resource location indicated by the reference signal resource location information, to send the PDSCH.

Selection of the foregoing two implementations in which the first device sends the PDSCH may be predefined by a protocol, or may be indicated by the first control information. This is not limited in this embodiment of this application.

Correspondingly, the fourth user equipment receives the fourth control information sent by the first device, and receives the PDSCH based on the fourth control information. That the fourth user equipment receives the PDSCH based on the fourth control information may include: receiving, by the fourth user equipment, the PDSCH on the resource other than the resource location indicated by the reference signal resource location information in the reference signal configuration information.

This embodiment is mainly for the TDD system, especially for a full-duplex device, for example, a full-duplex base station.

It should be noted that in any one of the foregoing embodiments, control information (including the first control information, the second control information, the third control information, and the fourth control information) may be carried in higher layer signaling or physical layer signaling for transmission. The higher layer signaling may include radio resource control (Radio Resource Control, RRC for short) signaling and the like. Further, both the higher layer signaling and the physical layer signaling include common signaling and dedicated signaling. Therefore, the control information may be carried in the common signaling for transmission, or may be carried in the dedicated signaling for transmission.

When the control information is carried in the common signaling, only some user equipments in a current cell may receive the dedicated signaling. In this case, after receiving the common signaling, user equipments having a resource conflict perform subsequent processing based on the control information carried in the common signaling. The subsequent processing includes receiving the PDSCH, sending the PUSCH, sending the first reference signal, or the like. For details, refer to the descriptions in the foregoing embodiments. However, user equipments having no resource conflict may not perform any operation.

When the control information is carried in the dedicated signaling, all user equipments in a current cell may receive the common signaling. In this case, after receiving the dedicated signaling, user equipments having a resource conflict perform subsequent processing based on the control information carried in the dedicated signaling. The subsequent processing includes receiving the PDSCH, sending the PUSCH, sending the first reference signal, or the like. For details, refer to the descriptions in the foregoing embodiments. However, user equipments having no resource conflict may not perform any operation.

The following describes apparatus embodiments of this application, which may be used to perform the method embodiments of this application. For details that are not disclosed in the apparatus embodiments of this application, refer to the method embodiments of this application.

FIG. 4 is a schematic structural diagram of Embodiment 1 of a signal transmission apparatus according to this application. This embodiment of this application provides a signal transmission apparatus. The signal transmission apparatus may be a first device. Referring to FIG. 4, the signal transmission apparatus 40 includes a receiving module 41.

The receiving module 41 is configured to: receive reference signal configuration information sent by another device (for example, a second device), where the reference signal configuration information includes reference signal resource location information and/or a reference signal sequence parameter, the reference signal resource location information is used to indicate a time domain resource and/or a frequency domain resource for transmitting a reference signal, the reference signal sequence parameter includes all or some parameters required for generating a reference signal sequence, and the reference signal is used to detect channel quality; and receive a reference signal sent by first user equipment corresponding to the reference signal configuration information.

The signal transmission apparatus in this embodiment of this application exchanges the reference signal configuration information with the another device, to implement coordinated transmission of a reference signal (for example, an SRS) sent by CoMP user equipment, so that the signal transmission apparatus and the another device do not need to separately configure, for the CoMP user equipment, a resource used to transmit the reference signal. In addition, the CoMP user equipment sends a same reference signal to a plurality of devices (including the signal transmission apparatus and the another device), so as to reduce delays in obtaining channel quality by different devices, and improve performance of coordinated transmission.

In the foregoing embodiment, the reference signal configuration information may be reference signal configuration information of coordinated multipoint transmission user equipment. For example, when being configured to receive the reference signal that is corresponding to the reference signal configuration information and that is sent by the first user equipment, the receiving module 41 is specifically configured to receive, based on the reference signal configuration information, a reference signal sent by the coordinated multipoint transmission user equipment.

Optionally, the reference signal resource location information may include pattern information of the reference signal on the time domain resource or the frequency domain resource.

Further, the reference signal resource location information may include time domain resource information and/or frequency domain resource information. The time domain resource information may include at least subframe location information, symbol location information, and/or the like.

Still further, the reference signal configuration information may include power information, and the power information is used to indicate a preset power value or power calculation information. The preset power value is a preset power value of the reference signal. The power calculation information is preset calculation information used to determine power of the reference signal.

Based on the foregoing embodiment, the signal transmission apparatus 40 may further include a first sending module 42. The first sending module 42 may be configured to: after the receiving module 41 receives the reference signal configuration information sent by the another device, send first control information to second user equipment for which a PUSCH is configured on the reference signal resource location information. The first control information may include first indication information, and the first indication information is used to indicate the resource location information in the reference signal configuration information, or the first indication information is used to indicate that the reference signal resource location information is not used to transmit the PUSCH of the second user equipment.

It should be noted that, that the reference signal resource location information is not used to transmit the PUSCH of the second user equipment may include: puncturing the PUSCH of the second user equipment at a resource location indicated by the reference signal resource location information, or performing, by the user equipment, rate matching on the PUSCH of the second user equipment on a resource other than a resource location indicated by the reference signal resource location information.

In this embodiment, the signal transmission apparatus does not configure the reference signal for the second user equipment on the reference signal resource location information, but the signal transmission apparatus configures the PUSCH for the second user equipment on the reference signal resource location information. Therefore, the signal transmission apparatus needs to instruct the second user equipment, for which the PUSCH is configured on the reference signal resource location information, not to transmit the PUSCH on the reference signal resource location information. In this way, on one hand, a conflict with transmission of the reference signal corresponding to the reference signal configuration information can be avoided, and on the other hand, accuracy of receiving the PDSCH by the second user equipment can be ensured.

Optionally, the signal transmission apparatus 40 may further include a second sending module 43.

The second sending module 43 is configured to: after the receiving module 41 receives the reference signal configuration information sent by the second device, send second control information to fifth user equipment for which a reference signal is configured on the reference signal resource location information. The second control information is used to indicate that the fifth user equipment for which the reference signal is configured on the reference signal resource location information sends a first reference signal, and the first reference signal is orthogonal to the reference signal sequence indicated by the SRS sequence parameter.

In this embodiment, the signal transmission apparatus configures the reference signal for the fifth user equipment on the reference signal resource location information. Therefore, the signal transmission apparatus needs to instruct the fifth user equipment, for which the reference signal is configured on the reference signal resource location information, to transmit, on the reference signal resource location information, the first reference signal orthogonal to the reference signal sequence indicated by the SRS sequence parameter, to avoid interference to transmission of the reference signal corresponding to the reference signal configuration information.

For example, the signal transmission apparatus 40 may further include a third sending module 44.

The third sending module 44 is configured to: after the receiving module 41 receives the reference signal configuration information sent by the another device, send third control information to third user equipment for which a reference signal is configured on the resource location information in the reference signal configuration information. The third control information is used to indicate that the third user equipment for which the reference signal is configured on the reference signal resource location information does not send the reference signal.

In this embodiment, the signal transmission apparatus configures the reference signal for the third user equipment on the reference signal resource location information. Therefore, the signal transmission apparatus needs to instruct the third user equipment, for which the reference signal is configured on the reference signal resource location information, not to send the reference signal on the reference signal resource location information, to avoid interference to transmission of the reference signal corresponding to the reference signal configuration information.

Further, the signal transmission apparatus 40 may further include a fourth sending module 45.

The fourth sending module 45 is configured to: after the receiving module 41 receives the reference signal configuration information sent by the another device, send fourth control information to fourth user equipment for which a PDSCH is configured on the reference signal resource location information. A reference signal of the fourth user equipment is not configured on the reference signal resource location information, and the PDSCH of the fourth user equipment is configured on the reference signal resource location information. The fourth control information may include second indication information, and the second indication information is used to indicate that the reference signal resource location information is not used to receive the PDSCH of the fourth user equipment.

In this embodiment, the signal transmission apparatus does not configure the reference signal for the fourth user equipment on the reference signal resource location information, but the signal transmission apparatus configures the PDSCH for the fourth user equipment on the reference signal resource location information. Therefore, the signal transmission apparatus needs to instruct the fourth user equipment, for which the PDSCH is configured on the reference signal resource location information, not to receive the PDSCH on the reference signal resource location information, to avoid occurrence of a conflict with transmission of the reference signal corresponding to the reference signal configuration information.

Based on the foregoing embodiment, in an implementation, the signal transmission apparatus 40 may further include a first processing module (not shown). The first processing module may be configured to: after the fourth processing module 45 sends the fourth control information to the fourth user equipment for which the PDSCH is configured on the reference signal resource location information, map the PDSCH to a configured resource corresponding to the PDSCH; and puncture at a resource location at which the configured resource corresponding to the PDSCH overlaps a resource location indicated by the reference signal resource location information. In this case, the fourth sending module 45 may be further configured to send a PDSCH on which puncturing processing has been performed.

In another implementation, the signal transmission apparatus 40 may further include a second processing module (not shown). The second processing module may be configured to: after the fourth processing module 45 sends the fourth control information to the fourth user equipment for which the PDSCH is configured on the reference signal resource location information, remove, from a configured resource corresponding to the PDSCH, a resource overlapping a resource location indicated by the reference signal resource location information, to obtain a first target resource corresponding to the PDSCH; and map the PDSCH to the first target resource. In the implementation, the fourth sending module 45 may be further configured to send the PDSCH.

FIG. 5 is a schematic structural diagram of Embodiment 2 of a signal transmission apparatus according to this application. This embodiment of this application provides a signal transmission apparatus. The signal transmission apparatus may be a second device. Referring to FIG. 5, the signal transmission apparatus 50 includes a sending module 51 and a receiving module 52.

The sending module 51 is configured to send reference signal configuration information to another device, where the reference signal configuration information includes reference signal resource location information and/or a reference signal sequence parameter, the reference signal resource location information is used to indicate a time domain resource and/or a frequency domain resource for transmitting a reference signal, the reference signal sequence parameter includes all or some parameters required for generating a reference signal sequence, the reference signal configuration information is used to indicate that the another device receives a reference signal sent by user equipment corresponding to the reference signal configuration information, and the reference signal is used to detect channel quality. The receiving module 52 is configured to receive, based on the reference signal configuration information, the reference signal sent by the user equipment corresponding to the reference signal configuration information.

For the signal transmission apparatus in this embodiment of this application, the another device exchanges the reference signal configuration information with the signal transmission apparatus, to implement coordinated transmission of a reference signal (for example, an SRS) sent by CoMP user equipment, so that the another device and the signal transmission apparatus do not need to separately configure, for the CoMP user equipment, a resource used to transmit the reference signal. In addition, the CoMP user equipment sends a same reference signal to a plurality of devices (including the another device and the signal transmission apparatus), so as to reduce delays in obtaining channel quality by different devices, and improve performance of coordinated transmission.

Optionally, the reference signal configuration information is reference signal configuration information of a coordinated multipoint transmission user equipment, and the reference signal configuration information is used to indicate that the another device receives, based on the reference signal configuration information, a reference signal sent by the coordinated multipoint transmission user equipment.

Optionally, the reference signal resource location information may be specifically pattern information of the reference signal on the time domain resource or the frequency domain resource.

Optionally, the reference signal resource location information may include time domain resource information, frequency domain resource information, and/or the like. The time domain resource information may include at least subframe location information or symbol location information.

Optionally, the reference signal configuration information may further include power information, the power information is used to indicate a preset power value or power calculation information, the preset power value is a preset power value of the reference signal, and the power calculation information is preset calculation information used to determine power of the reference signal.

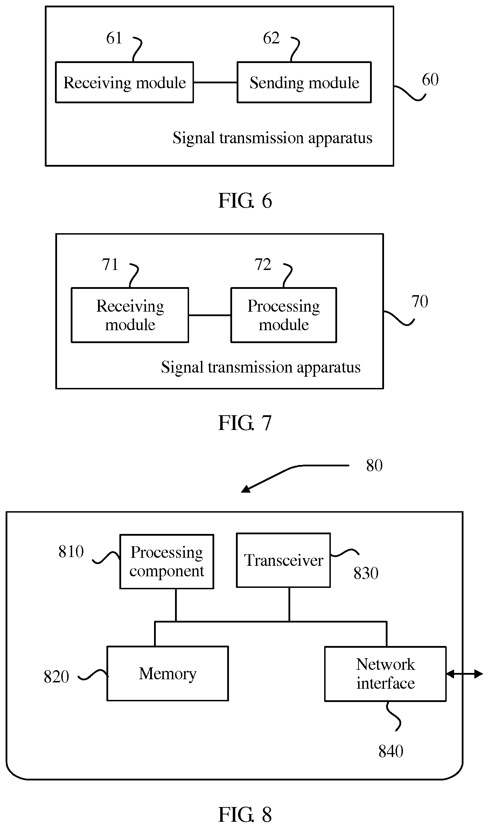

FIG. 6 is a schematic structural diagram of Embodiment 3 of a signal transmission apparatus according to this application. This embodiment of this application provides a signal transmission apparatus. The signal transmission apparatus may be user equipment. Referring to FIG. 6, the signal transmission apparatus 60 includes a receiving module 61 and a sending module 62.

The receiving module 61 is configured to receive first control information sent by a first device, where a reference signal is not configured for the signal transmission apparatus on reference signal resource location information in reference signal configuration information received by the first device, but a to-be-transmitted PUSCH is configured, the first control information includes first indication information, the first indication information is used to indicate the resource location information in the reference signal configuration information, or the first indication information is used to indicate that the reference signal resource location information is not used to transmit the PUSCH of the signal transmission apparatus 60, and the reference signal is used to detect channel quality. The sending module 62 is configured to send the PUSCH based on the first control information.

For the signal transmission apparatus in this embodiment of this application, the signal transmission apparatus receives the first control information sent by the first device, to implement coordinated transmission of a reference signal sent by the signal transmission apparatus, so that the first device and a second device do not need to separately configure, for the signal transmission apparatus, a resource used to transmit the reference signal. In addition, the signal transmission apparatus sends a same reference signal to a plurality of devices (including the first device and the second device), so as to reduce delays in obtaining channel quality by different devices, and improve performance of coordinated transmission.

In an embodiment, the sending module 62 may be specifically configured to: map the PUSCH to a configured resource corresponding to the PUSCH; puncture at a resource location at which the configured resource corresponding to the PUSCH overlaps a resource location indicated by the reference signal resource location information; and send a PUSCH on which puncturing processing has been performed.

In another embodiment, the sending module 62 may be specifically configured to: remove, from a configured resource corresponding to the PUSCH, a resource overlapping a resource location indicated by the reference signal resource location information, to obtain a second target resource corresponding to the PUSCH; map the PUSCH to the second target resource; and send the PUSCH.

Alternatively, the receiving module 61 is configured to receive second control information sent by the first device, where a reference signal is not configured for the signal transmission apparatus on the reference signal resource location information 60 in the reference signal configuration information received by the first device, the second control information is used to indicate that the signal transmission apparatus 60 sends a first reference signal, and the first reference signal is orthogonal to a reference signal indicated by an SRS sequence parameter in the SRS configuration information. The sending module 62 is configured to send the first reference signal based on the second control information.

For the signal transmission apparatus in this embodiment of this application, the signal transmission apparatus receives the second control information sent by the first device, to implement coordinated transmission of the reference signal (for example, an SRS) sent by the signal transmission apparatus, so that the first device and the second device do not need to separately configure, for the signal transmission apparatus, a resource used to transmit the reference signal. In addition, the signal transmission apparatus sends a same reference signal to a plurality of devices (including the first device and the second device), so as to reduce delays in obtaining channel quality by different devices, and improve performance of coordinated transmission.

Further, the sending module 62 may be specifically configured to send the first reference signal on a resource indicated by the reference signal resource location information that is in the reference signal configuration information and that is included in the second control information.

FIG. 7 is a schematic structural diagram of Embodiment 4 of a signal transmission apparatus according to this application. This embodiment of this application provides a signal transmission apparatus. The signal transmission apparatus may be user equipment. Referring to FIG. 7, the signal transmission apparatus 70 includes a receiving module 71 and a processing module 72.

The receiving module 71 is configured to receive third control information sent by the first device, where a reference signal is configured for the signal transmission apparatus 70 on resource location information in reference signal configuration information received by the first device, and the third control information is used to indicate that the signal transmission apparatus 70 does not send a reference signal on the reference signal resource location information. The processing module 72 is configured to determine that the reference signal is not sent on the reference signal resource location information.

For the signal transmission apparatus in this embodiment of this application, the signal transmission apparatus receives the third control information sent by the first device, to implement coordinated transmission of the reference signal (for example, an SRS) sent by the signal transmission apparatus, so that the first device and a second device do not need to separately configure, for the signal transmission apparatus, a resource used to transmit the reference signal.

In addition, the signal transmission apparatus sends a same reference signal to a plurality of devices (including the first device and the second device), so as to reduce delays in obtaining channel quality by different devices, and improve performance of coordinated transmission.

The structure shown in FIG. 7 is still used as an example. Alternatively, the receiving module 71 is configured to: receive fourth control information sent by the first device, where a reference signal is not configured for the signal transmission apparatus 70 on the resource location information in the reference signal configuration information received by the first device, but a to-be-transmitted PDSCH is configured, the fourth control information includes second indication information, and the second indication information is used to indicate that the first device punctures the PDSCH at a resource location indicated by the reference signal resource location information, or the second indication information is used to indicate that the first device performs rate matching on the PDSCH a resource other than a resource location indicated by the reference signal resource location information; and receive the PDSCH based on the fourth control information. In this embodiment, the signal transmission apparatus 70 may not include the processing module 72.

Optionally, when being configured to receive the PDSCH based on the fourth control information, the receiving module 71 is specifically configured to receive the PDSCH on the resource other than the resource location indicated by the reference signal resource location information in the reference signal configuration information.

For the signal transmission apparatus in this embodiment of this application, the signal transmission apparatus receives the fourth control information sent by the first device, to implement coordinated transmission of a reference signal sent by the signal transmission apparatus, so that the first device and the second device do not need to separately configure, for the signal transmission apparatus, a resource used to transmit the reference signal. In addition, the signal transmission apparatus sends a same reference signal to a plurality of devices (including the first device and the second device), so as to reduce delays in obtaining channel quality by different devices, and improve performance of coordinated transmission.

FIG. 8 is a schematic structural diagram of Embodiment 5 of a signal transmission apparatus according to this application. This embodiment of this application provides a signal transmission apparatus. The signal transmission apparatus may be a first device or a second device. Referring to FIG. 8, the signal transmission apparatus 80 includes a processing component 810, and the processing component 810 further includes one or more processors and a transceiver 830. The transceiver 830 further includes a receiver and/or a transmitter, and is configured to perform transmission over an air interface. The receiver and the transmitter may be disposed through integration, or may be disposed separately. Further, the signal transmission apparatus 80 may include a memory resource represented by a memory 820, and the memory resource is used to store an instruction, for example, an application program, that can be executed by the processing component 810. The application program stored in the memory 820 may include one or more modules that each correspond to a set of instructions. In addition, the processing component 810 is configured to execute the instructions, to perform the foregoing corresponding signal transmission method. The memory 820 may be integrated into the processing component 810, or may be separated from the processing component 810. This is not limited herein.

The signal transmission apparatus 80 may further include a wired or wireless network interface 840. The network interface 840 is configured to connect the signal transmission apparatus 80 to another network device, for example, a core network element.

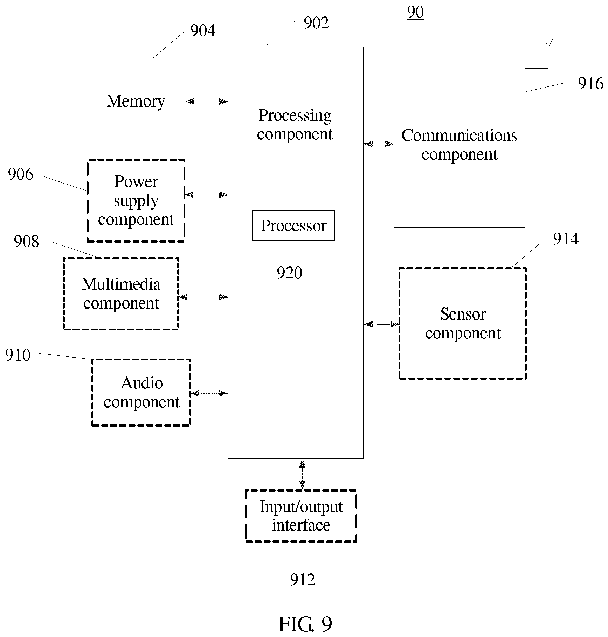

FIG. 9 is a schematic structural diagram of Embodiment 6 of a signal transmission apparatus according to this application. This embodiment of this application provides a signal transmission apparatus. The signal transmission apparatus may be user equipment. Referring to FIG. 9, the signal transmission apparatus 90 may include a processing component 902 and a communications component 916. The processing component 902 is configured to perform the foregoing corresponding signal transmission method, and the communications component 916 is configured to perform transmission over an air interface.

Further, the signal transmission apparatus 90 may include a memory 904. The memory 904 may be integrated into the processing component 902, or may be separated from the processing component 902.

The memory 904 is configured to store an instruction, for example, an application program, that can be executed by the processing component 902.

For example, the signal transmission apparatus 90 may further include one or more of the following components: a power supply component 906, a multimedia component 908, an audio component 910, an input/output (input/output, I/O for short) interface 912, and a sensor component 914.

In an example, the processing component 902 usually controls an overall operation of the signal transmission apparatus 90, for example, an operation related to display, data communication, a camera operation, and a recording operation. The processing component 902 may include one or more processors 920 to execute an instruction, to complete all of or some of the steps of the foregoing method. In addition, the processing component 902 may include one or more modules, so that the processing component 902 interacts with another component. For example, the processing component 902 may include a multimedia module, so that the multimedia component 908 interacts with the processing component 902.

The memory 904 is configured to store various types of data to support the operation of the signal transmission apparatus 90. An example of the data includes an instruction, contact data, address book data, a message, an image, a video, and the like of any application program or method that are used to perform an operation on the signal transmission apparatus 90. The memory 904 may be implemented by any type of volatile storage device, any type of volatile non-volatile storage device, or a combination thereof, such as a static random access memory (Static Random Access Memory, SRAM for short), an electrically erasable programmable read-only memory (Electrically Erasable Programmable Read-Only Memory, EEPROM for short), an erasable programmable read-only memory (Erasable Programmable Read-Only Memory, EPROM for short), a programmable read-only memory (Programmable Red-Only Memory, PROM for short), a read-only memory (Read-Only Memory, ROM for short), a magnetic memory, a flash memory, a magnetic disk, or an optical disc.

The power supply component 906 supplies power to various components of the signal transmission apparatus 90. The power supply component 906 may include a power management system, one or more power supplies, and another component related to generation, management, and distribution of power for the signal transmission apparatus 90.

The multimedia component 908 includes a screen providing an output interface between the signal transmission apparatus 90 and a user. In some embodiments, the screen may include a liquid crystal display (Liquid Crystal Display, LCD for short) and a touch panel (Touch Panel, TP for short). If the screen includes the touch panel, the screen may be implemented as a touchscreen, to receive an input signal from the user. The touch panel includes one or more touch sensors to sense a touch, sliding, and a gesture that is on the touch panel. The touch sensor not only may sense a boundary of a touch action or a sliding action, but also detects duration and pressure that are related to the touch operation or the sliding operation. In some embodiments, the multimedia component 908 includes a front-facing camera and/or a rear-facing camera. When the signal transmission apparatus 90 is in an operation mode, for example, in a shooting mode or in a video mode, the front-facing camera and/or the rear-facing camera may receive external multimedia data. Each front-facing camera and each rear-facing camera may be a fixed optical lens system or may have a focal length and an optical zoom capability.

The audio component 910 is configured to output and/or input an audio signal. For example, the audio component 910 includes a microphone (Microphone, MIC for short). When the signal transmission apparatus 90 is in an operation mode, for example, in a call mode, a recording mode, or a voice recognition mode, the microphone is configured to receive an external audio signal. The received audio signal may be further stored in the memory 904 or sent by using the communications component 916. In some embodiments, the audio component 910 further includes a speaker, configured to output an audio signal.

The I/O interface 912 provides an interface between the processing component 902 and a peripheral interface module, and the peripheral interface module may be a keyboard, a click wheel, buttons, or the like. These buttons may include, but are not limited to, a home button, a volume button, a startup button, and a lock button.

The sensor component 914 includes one or more sensors, configured to provide status estimation in various aspects for the signal transmission apparatus 90. For example, the sensor component 914 may detect an on/off state of the signal transmission apparatus 90 and relative positioning of the component. For example, the component is a display or a small keyboard of the signal transmission apparatus 90. The sensor component 914 may further detect a location change of the signal transmission apparatus 90 or a component of the signal transmission apparatus 90, existence or nonexistence of contact between the user and the signal transmission apparatus 90, an orientation or acceleration/deceleration of the signal transmission apparatus 90, and a temperature change of the signal transmission apparatus 90. The sensor component 914 may include a proximity sensor, configured to detect existence of a nearby object when there is no physical contact. The sensor component 914 may further include an optical sensor, such as a complementary metal-oxide-semiconductor (Complementary Metal-Oxide-Semiconductor, CMOS for short), a charge-coupled device (Charge-coupled Device, CCD for short), or a photosensitive imaging element, and is configured in an imaging application. In some embodiments, the sensor component 914 may further include an acceleration sensor, a gyro sensor, a magnetic sensor, a pressure sensor, or a temperature sensor.

The communications component 916 is configured to enable the signal transmission apparatus 90 to communicate with another device in a wired manner or wirelessly. The signal transmission apparatus 90 may access a wireless network according to a communication standard, such as Wireless Fidelity (Wireless Fidelity, Wi-Fi for short), 2G, 3G, or a combination thereof. In an example of an embodiment, the communications component 916 receives a broadcast signal or broadcast-related information from an external broadcast management system by using a broadcast channel. In an example of an embodiment, the communications component 916 further includes a near field communication (Near Field Communication, NFC for short) module, to facilitate short-range communication. For example, the NFC module may be implemented based on a radio frequency identification (Radio Frequency Identification, RFID for short) technology, an infrared data association (Infrared Data Association, IrDA for short) technology, an ultra-wideband (Ultra-Wideband, UWB for short) technology, a Bluetooth (Bluetooth, BT for short) technology, and another technology.

In an example of an embodiment, the signal transmission apparatus 90 may be implemented by one or more application-specific integrated circuits (Application-Specific Integrated Circuit, ASIC for short), a digital signal processor (Digital Signal Processor, DSP for short), a digital signal processing device (Digital Signal Processing device, DSPD for short), a programmable logic device (Programmable Logic Device, PLD for short), a field programmable gate array (Field Programmable Gate Array, FPGA for short), a controller, a microcontroller, a microprocessor, or another electronic element, and is configured to perform the foregoing signal transmission method.

A non-temporary computer readable storage medium is provided. When an instruction in the storage medium is executed by a processor in a first device, a second device, or user equipment, the first device, the second device, or the user equipment can perform the foregoing corresponding signal transmission method.

An embodiment of this application further provides a communications system. The communications system includes the first device and/or the second device described in the foregoing embodiments.

Further, the communications system may include the user equipment described in the foregoing embodiments.

For specific descriptions, refer to the foregoing embodiments. Details are not described herein.

In the several embodiments provided in this application, it should be understood that the disclosed device and method may be implemented in another manner. For example, the described device embodiment is merely an example. For example, the unit or unit division is merely logical function division and may be other division during actual implementation. For example, a plurality of units or modules may be combined or integrated into another system, or some features may be ignored or not performed. In addition, the displayed or discussed mutual couplings, direct couplings, or communication connections may be implemented by using some interfaces. The indirect couplings or communication connections between the devices or modules may be implemented in electrical, mechanical, or other forms.

The modules described as separate parts may or may not be physically separate, and parts displayed as modules may or may not be physical modules, may be located in one position, or may be distributed on a plurality of network units. Some or all of the modules may be selected according to actual needs to achieve the objectives of the solutions of the embodiments.

A person of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes any medium that can store program code, such as a ROM, a RAM, a magnetic disk, or an optical disc.

Finally, it should be noted that the foregoing embodiments are merely intended for describing the technical solutions of this application other than limiting this application. Although this application is described in detail with reference to the foregoing embodiments, a person of ordinary skill in the art should understand that they may still make modifications to the technical solutions described in the foregoing embodiments or make equivalent replacements to some or all technical features thereof, without departing from the scope of the 2. appended claims.

**Claims**

1. A signal transmission method performed by a first device (40), comprising:

    receiving reference signal configuration information sent by a second device (50), wherein the reference signal configuration information comprises reference signal resource location information and/or a reference signal sequence parameter, the reference signal resource location information is used to indicate a time domain resource and/or a frequency domain resource for transmitting a reference signal, the reference signal sequence parameter comprises all or some parameters required for generating a reference signal sequence, and the reference signal is used to detect channel quality; and
    receiving a reference signal sent by first user equipment (60, 70) corresponding to the reference signal configuration information,
    wherein after the receiving reference signal configuration information sent by a second device (50), the method further comprises:

    sending first control information to second user equipment (60, 70) for which a physical uplink shared channel PUSCH is configured on the reference signal resource location information, wherein the first control information comprises first indication information, and the first indication information is used to indicate the reference signal resource location information in the reference signal configuration information, or the first indication information is used to indicate that the reference signal resource location information is not used to transmit the PUSCH of the second user equipment (60, 70),
    wherein the reference signal resource location information is not used to transmit the PUSCH of the second user equipment (60, 70) includes: puncturing the PUSCH of the second user equipment (60, 70) at a resource location indicated by the reference signal resource location information, or performing rate matching on the PUSCH of the second user equipment (60, 70) on a resource other than a resource location indicated by the reference signal resource location information.

2. The method according to claim 1, wherein the reference signal resource location information comprises time domain resource information and/or frequency domain resource information, wherein the time domain resource information comprises at least subframe location information and/or symbol location information; or the reference signal resource location information comprises pattern information of the reference signal on the time domain resource or the frequency domain resource.

3. The method according to claim 1 or 2, wherein after the receiving reference signal configuration information sent by a second device (50), the method further comprises:

sending second control information to third user equipment (60, 70) for which a reference signal is configured on the resource location information in the reference signal configuration information, wherein
the second control information is used to indicate that the third user equipment (60, 70) for which the reference signal is configured on the reference signal resource location information does not send the reference signal.

4. The method according to any one of claims 1 to 3, wherein the reference signal configuration information further comprises power information, the power information is used to indicate a preset power value or power calculation information, the preset power value is a preset power value of the reference signal, and the power calculation information is preset calculation information used to determine power of the reference signal.

5. A signal transmission method performed by a first device (40), comprising:

receiving reference signal configuration information sent by a second device (50), wherein the reference signal configuration information comprises reference signal resource location information and/or a reference signal sequence parameter, the reference signal resource location information is used to indicate a time domain resource and/or a frequency domain resource for transmitting a reference signal, the reference signal sequence parameter comprises all or some parameters required for generating a reference signal sequence, and the reference signal is used to detect channel quality; and
receiving a reference signal sent by first user equipment (60, 70) corresponding to the reference signal configuration information,
wherein after the receiving reference signal configuration information sent by a second device (50), the method further comprises:

sending first control information to a second user equipment (60, 70) for which a physical downlink shared channel PDSCH is configured on the reference signal resource location information, wherein
the first control information comprises a first indication information, and the first indication information is used to indicate that the reference signal resource location information is not used to receive the PDSCH of the second user equipment (60, 70),
wherein after the sending, by the first device (40), first control information to the second user equipment (60, 70) for which a PDSCH is configured on the reference signal resource location information, the method further includes:

mapping, by the first device (40), the PDSCH to a configured resource corresponding to the PDSCH; performing, by the first device (40), puncturing at a resource location at which the configured resource corresponding to the PDSCH overlaps a resource location indicated by the reference signal resource location information; and sending, by the first device (40), a PDSCH on which puncturing processing has been performed, or
removing, by the first device (40) from a configured resource corresponding to the PDSCH, a resource overlapping a resource location indicated by the reference signal resource location information, to obtain a first target resource corresponding to the PDSCH; mapping, by the first device (40), the PDSCH to the first target resource; and sending, by the first device (40), the PDSCH.

6. The method according to claim 5, wherein the reference signal resource location information comprises time domain resource information and/or frequency domain resource information, wherein the time domain resource information comprises at least subframe location information and/or symbol location information; or the reference signal resource location information comprises pattern information of the reference signal on the time domain resource or the frequency domain resource.

7. The method according to claim 5 or 6, wherein after the receiving reference signal configuration information sent by a second device (50), the method further comprises:

sending second control information to third user equipment (60, 70) for which a reference signal is configured on the resource location information in the reference signal configuration information, wherein the second control information is used to indicate that the third user equipment (60, 70) for which the reference signal is configured on the reference signal resource location information does not send the reference signal.

8. The method according to any one of claims 5 to 7, wherein the reference signal configuration information further comprises power information, the power information is used to indicate a preset power value or power calculation information, the preset power value is a preset power value of the reference signal, and the power calculation information is preset calculation information used to determine power of the reference signal.

9. A signal transmission apparatus (80), comprising a transceiver (830) and a processor (810), wherein the processor (810) is configured to execute an instruction, to implement any method according to claims 1 to 8 in combination with the transceiver (830).

10. A computer readable storage medium, comprising a computer program, wherein when the computer program runs on a computer, it causes the computer to carry out the method according to any one of claims 1 to 8 .

**Patentansprüche**

1. Signalübertragungsverfahren, durchgeführt durch eine erste Vorrichtung (40), umfassend:

Empfangen von Referenzsignal-Konfigurationsinformationen, gesendet durch eine zweite Vorrichtung (50), wobei die Referenzsignal-Konfigurationsinformationen Referenzsignal-Ressourcenortsinformationen und/oder einen Referenzsignal-Sequenzparameter umfassen, wobei die Referenzsignal-Ressourcenortsinformationen verwendet werden zum Angeben einer Zeitdomänenressource und/oder einer Frequenzdomänenressource zum Übertragen eines Referenzsignals, wobei der Referenzsignal-Sequenzparameter alle oder einige Parameter umfasst, die zum Erzeugen einer Referenzsignalsequenz erforderlich sind, und das Referenzsignal verwendet wird zum Detektieren von Kanalqualität; und Empfangen eines Referenzsignals, gesendet durch ein erstes Benutzergerät (60, 70) entsprechend den Referenzsignal-Konfigurationsinformationen, wobei das Verfahren, nach dem Empfangen von Referenzsignal-Konfigurationsinformationen, gesendet durch eine zweite Vorrichtung (50), ferner Folgendes umfasst:

Senden von ersten Steuerinformationen an ein zweites Benutzergerät (60, 70), für das ein physischer Uplink-Gemeinkanal bzw. PUSCH in den Referenzsignal-Ressourcenortsinformationen konfiguriert ist, wobei die ersten Steuerinformationen erste Angabeinformationen umfassen und die ersten Angabeinformationen verwendet werden zum Angeben der Referenzsignal-Ressourcenortsinformationen in den Referenzsignal-Konfigurationsinformationen, oder die ersten Angabeinformationen verwendet werden zum Angeben, dass die Referenzsignal-Ressourcenortsinformationen nicht zum Übertragen des PUSCH des zweiten Benutzergeräts (60, 70) verwendet werden, wobei, dass die Referenzsignal-Ressourcenortsinformationen nicht zum Übertragen des PUSCH des zweiten Benutzergeräts (60, 70) verwendet werden, Folgendes beinhaltet: Punktieren des PUSCH des zweiten Benutzergeräts (60, 70) an einem Ressourcenort, der durch die Referenzsignal-Ressourcenortsinformationen angegeben wird, oder Durchführen von Ratenabgleich auf dem PUSCH des zweiten Benutzergeräts (60, 70) auf einer anderen Ressource als einem Ressourcenort, der durch die Referenzsignal-Ressourcenortsinformationen angegeben wird.

2. Verfahren nach Anspruch 1, wobei die Referenzsignal-Ressourcenortsinformationen Zeitdomänenressourceninformationen und/oder Frequenzdomänenressourceninformationen umfassen, wobei die Zeitdomänenressourceninformationen mindestens Subframeortsinformationen und/oder Symbolortsinformationen umfassen; oder die Referenzsignal-Ressourcenortsinformationen Musterinformationen des Referenzsignals auf der Zeitdomänenressource oder der Frequenzdomänenressource umfassen.

3. Verfahren nach Anspruch 1 oder 2, wobei das Verfahren, nach dem Empfangen von Referenzsignal-Konfigurationsinformationen, gesendet durch eine zweite Vorrichtung (50), ferner Folgendes umfasst:
Senden zweiter Steuerinformationen an ein drittes Benutzergerät (60, 70), für das ein Referenzsignal in den Ressourcenortsinformationen in den Referenzsignal-Konfigurationsinformationen konfiguriert ist, wobei die zweiten Steuerinformationen verwendet werden zum Angeben, dass das dritte Benutzergerät (60, 70), für das das Referenzsignal in den Referenzsignal-Ressourcenortsinformationen konfiguriert ist, das Referenzsignal nicht sendet.

4. Verfahren nach einem der Ansprüche 1 bis 3, wobei die Referenzsignal-Konfigurationsinformationen ferner Leistungsinformationen umfassen, wobei die Leistungsinformationen verwendet werden zum Angeben eines voreingestellten Leistungswerts oder von Leistungsberechnungsinformationen, wobei der voreingestellte Leistungswert ein voreingestellter Leistungswert des Referenzsignals ist und die Leistungsberechnungsinformationen voreingestellte Berechnungsinformationen sind, die zum Bestimmen einer Leistung des Referenzsignals verwendet werden.

5. Signalübertragungsverfahren, durchgeführt durch eine erste Vorrichtung (40), umfassend:

Empfangen von Referenzsignal-Konfigurationsinformationen, gesendet durch eine zweite Vorrichtung (50), wobei die Referenzsignal-Konfigurationsinformationen Referenzsignal-Ressourcenortsinformationen und/oder einen Referenzsignal-Sequenzparameter umfassen, wobei die Referenzsignal-Ressourcenortsinformationen verwendet werden zum Angeben einer Zeitdomänenressource und/oder einer Frequenzdomänenressource zum Übertragen eines Referenzsignals, wobei der Referenzsignal-Sequenzparameter alle oder einige Parameter umfasst, die zum Erzeugen einer Referenzsignalsequenz erforderlich sind, und das Referenzsignal verwendet wird zum Detektieren von Kanalqualität; und
Empfangen eines Referenzsignals, gesendet durch ein erstes Benutzergerät (60, 70) entsprechend den Referenzsignal-Konfigurationsinformationen,
wobei das Verfahren, nach dem Empfangen von Referenzsignal-Konfigurationsinformationen, gesendet durch eine zweite Vorrichtung (50), ferner Folgendes umfasst:

Senden von ersten Steuerinformationen an ein zweites Benutzergerät (60, 70), für das ein physischer Downlink-Gemeinkanal bzw. PDSCH in den Referenzsignal-Ressourcenortsinformationen konfiguriert ist, wobei die ersten Steuerinformationen erste Angabeinformationen umfassen, und die ersten Angabeinformationen verwendet werden zum Angeben, dass die Referenzsignal-Ressourcenortsinformationen nicht zum Empfangen des PDSCH des zweiten Benutzergeräts (60, 70) verwendet werden,
wobei das Verfahren, nach dem Senden, durch die erste Vorrichtung (40), von ersten Steuerinformationen an das zweite Benutzergerät (60, 70), für das ein PDSCH in den Referenzsignal-Ressourcenortsinformationen konfiguriert ist, ferner Folgendes umfasst:

Abbilden, durch die erste Vorrichtung (40), des PDSCH auf eine konfigurierte Ressource, die dem PDSCH entspricht; Durchführen, durch die erste Vorrichtung (40) von Punktieren an einem Ressourcenort, an dem die konfigurierte Ressource, die dem PDSCH entspricht, mit einem Ressourcenort überlappt, der durch die Referenzsignal-Ressourcenortsinformationen angegeben wird; und Senden, durch die erste Vorrichtung (40), eines PDSCH, an dem Punktierungsverarbeitung durchgeführt wurde, oder
Entfernen, durch die erste Vorrichtung (40) aus einer konfigurierten Ressource, die dem PDSCH entspricht, einer Ressource, die mit einem Ressourcenort überlappt, der durch die Referenzsignal-Ressourcenortsinformationen angegeben wird, um eine erste Zielressource zu erhalten, die dem PDSCH entspricht; Abbilden, durch die erste Vorrichtung (40), des PDSCH auf die erste Zielressource; und Senden, durch die erste Vorrichtung (40), des PDSCH.

6. Verfahren nach Anspruch 5, wobei die Referenzsignal-Ressourcenortsinformationen Zeitdomänenressourceninformationen und/oder Frequenzdomänenressourceninformationen umfassen, wobei die Zeitdomänenressourceninformationen mindestens Subframeortsinformationen und/oder Symbolortsinformationen umfassen; oder die Referenzsignal-Ressourcenortsinformationen Musterinformationen des Referenzsignals auf der Zeitdomänenressource oder der Frequenzdomänenressource umfassen.

7. Verfahren nach Anspruch 5 oder 6, wobei das Verfahren, nach dem Empfangen von Referenzsignal-Konfigurationsinformationen, gesendet durch eine zweite Vorrichtung (50), ferner Folgendes umfasst:

Senden zweiter Steuerinformationen an ein drittes Benutzergerät (60, 70), für das ein Referenzsignal in den Ressourcenortsinformationen in den Referenzsignal-Konfigurationsinformationen konfiguriert ist, wobei die zweiten Steuerinformationen verwendet werden zum Angeben, dass das dritte Benutzergerät (60, 70), für das das Referenzsignal in den Referenzsignal-Ressourcenortsinformationen konfiguriert ist, das Referenzsignal nicht sendet.

8. Verfahren nach einem der Ansprüche 5 bis 7, wobei die Referenzsignal-Konfigurationsinformationen ferner Leistungsinformationen umfassen, wobei die Leistungsinformationen verwendet werden zum Angeben eines voreingestellten Leistungswerts oder von Leistungsberechnungsinformationen, wobei der voreingestellte Leistungswert ein voreingestellter Leistungswert des Referenzsignals ist und die Leistungsberechnungsinformationen voreingestellte Berechnungsinformationen sind, die zum Bestimmen einer Leistung des Referenzsignals verwendet werden.

9. Signalübertragungseinrichtung (80), umfassend einen Sendeempfänger (830) und einen Prozessor (810), wobei der Prozessor (810) ausgelegt ist zum Ausführen einer Anweisung zum Implementieren jeglichen Verfahrens nach Ansprüchen 1 bis 8 in Kombination mit dem Sendeempfänger (830).

10. Computerlesbares Speicherungsmedium, umfassend ein Computerprogramm, wobei, wenn das Computerprogramm auf einem Computer läuft, dieses den Computer zum Ausführen des Verfahrens nach einem der Ansprüche 1 bis 8 veranlasst.

## Revendications

1. Procédé de transmission de signal effectué par un premier dispositif (40), comprenant les étapes consistant à :

recevoir une information de configuration de signal de référence envoyée par un deuxième dispositif (50), l'information de configuration de signal de référence comprenant une information d'emplacement de ressource de signal de référence et/ou un paramètre de séquence de signaux de référence, l'information d'emplacement de ressource de signal de référence étant utilisée pour indiquer une ressource de domaine temporel et/ou une ressource de domaine fréquentiel pour la transmission d'un signal de référence, le paramètre de séquence de signaux de référence comprenant la totalité ou une partie des paramètres exigés pour générer une séquence de signaux de référence, et le signal de référence étant utilisé pour détecter une qualité de canal ; et
recevoir un signal de référence envoyé par un premier équipement utilisateur (60, 70) correspondant à l'information de configuration de signal de référence,
le procédé, après la réception de l'information de configuration de signal de référence envoyée par un deuxième dispositif (50), comprenant également l'étape consistant à :

envoyer une première information de commande à un deuxième équipement utilisateur (60, 70) pour lequel un canal partagé de liaison montante physique PUSCH est configuré sur l'information d'emplacement de ressource de signal de référence, la première information de commande comprenant une première information d'indication, et la première information d'indication étant utilisée pour indiquer l'information d'emplacement de ressource de signal de référence dans l'information de configuration de signal de référence, ou la première information d'indication étant utilisée pour indiquer que l'information d'emplacement de ressource de signal de référence n'est pas utilisée pour transmettre le PUSCH du deuxième équipement utilisateur (60, 70),
dans lequel le fait que l'information d'emplacement de ressource de signal de référence n'est pas utilisée pour transmettre le PUSCH du deuxième équipement utilisateur (60, 70) comprend l'étape consistant à : perforer le PUSCH du deuxième équipement utilisateur (60, 70) au niveau d'un emplacement de ressource indiqué par l'information d'emplacement de ressource de signal de référence, ou effectuer une adaptation de débit sur le PUSCH du deuxième équipement utilisateur (60, 70) sur une ressource autre qu'un emplacement de ressource indiqué par l'information d'emplacement de ressource de signal de référence.

2. Procédé selon la revendication 1, dans lequel l'information d'emplacement de ressource de signal de référence comprend une information de ressource de domaine temporel et/ou une information de ressource de domaine fréquentiel, l'information de ressource de domaine temporel comprenant au moins une information d'emplacement de sous-trame et/ou une information d'emplacement de symbole ; ou l'information d'emplacement de ressource de signal de référence comprend une information de motif du signal de référence sur la ressource de domaine temporel ou la ressource de domaine fréquentiel.

**3.** Procédé selon la revendication 1 ou 2, le procédé, après la réception d'une information de configuration de signal de référence envoyée par un deuxième dispositif (50), comprenant également l'étape consistant à :
envoyer une deuxième information de commande à un troisième équipement utilisateur (60, 70) pour lequel un signal de référence est configuré sur l'information d'emplacement de ressource dans l'information de configuration de signal de référence, la deuxième information de commande étant utilisée pour indiquer que le troisième équipement utilisateur (60, 70) pour lequel le signal de référence est configuré sur l'information d'emplacement de ressource de signal de référence n'envoie pas le signal de référence.

**4.** Procédé selon l'une quelconque des revendications 1 à 3, dans lequel l'information de configuration de signal de référence comprend également une information de puissance, l'information de puissance étant utilisée pour indiquer une valeur de puissance prédéfinie ou une information de calcul de puissance, la valeur de puissance prédéfinie étant une valeur de puissance prédéfinie du signal de référence, et l'information de calcul de puissance étant une information de calcul prédéfinie utilisée pour déterminer la puissance du signal de référence.

**5.** Procédé de transmission de signal effectué par un premier dispositif (40), comprenant les étapes consistant à :

recevoir une information de configuration de signal de référence envoyée par un deuxième dispositif (50), l'information de configuration de signal de référence comprenant une information d'emplacement de ressource de signal de référence et/ou un paramètre de séquence de signaux de référence, l'information d'emplacement de ressource de signal de référence étant utilisée pour indiquer une ressource de domaine temporel et/ou une ressource de domaine fréquentiel pour la transmission d'un signal de référence, le paramètre de séquence de signaux de référence comprenant la totalité ou une partie des paramètres exigés pour générer une séquence de signaux de référence, et le signal de référence étant utilisé pour détecter une qualité de canal ; et
recevoir un signal de référence envoyé par un premier équipement utilisateur (60, 70) correspondant à l'information de configuration de signal de référence,
le procédé, après la réception de l'information de configuration de signal de référence envoyée par un deuxième dispositif (50), comprenant également l'étape consistant à :

envoyer une première information de commande à un deuxième équipement utilisateur (60, 70) pour lequel un canal partagé de liaison descendante physique PDSCH est configuré sur l'information d'emplacement de ressource de signal de référence, la première information de commande comprenant une première information d'indication, et la première information d'indication étant utilisée pour indiquer que l'information d'emplacement de ressource de signal de référence n'est pas utilisée pour recevoir le PDSCH du deuxième équipement utilisateur (60, 70),
le procédé, après l'envoi, par le premier dispositif (40), de la première information de commande au deuxième équipement utilisateur (60, 70) pour lequel un PDSCH est configuré sur l'information d'emplacement de ressource de signal de référence, comprenant également l'étape consistant à :

mettre en correspondance, par le premier dispositif (40), le PDSCH avec une ressource configurée correspondant au PDSCH ; effectuer, par le premier dispositif (40), une perforation en un emplacement de ressource au niveau duquel la ressource configurée correspondant au PDSCH chevauche un emplacement de ressource indiqué par l'information d'emplacement de ressource de signal de référence ; et envoyer, par le premier dispositif (40), un PDSCH sur lequel un traitement de perforation a été effectué, ou
éliminer, par le premier dispositif (40), d'une ressource configurée correspondant au PDSCH, une ressource chevauchant un emplacement de ressource indiqué par l'information d'emplacement de ressource de signal de référence, pour obtenir une première ressource cible correspondant au PDSCH ; mettre en correspondance, par le premier dispositif (40), le PDSCH avec la première ressource cible ; et envoyer, par le premier dispositif (40), le PDSCH.

**6.** Procédé selon la revendication 5, dans lequel l'information d'emplacement de ressource de signal de référence comprend une information de ressource de domaine temporel et/ou une information de ressource de domaine fréquentiel, l'information de ressource de domaine temporel comprenant au moins une information d'emplacement de sous-trame et/ou une information d'emplacement de symbole ; ou l'information d'emplacement de ressource de signal de référence comprend une information de motif du signal de référence sur la ressource de domaine temporel ou la ressource de domaine fréquentiel.

**7.** Procédé selon la revendication 5 ou 6, le procédé, après la réception d'une information de configuration de signal de référence envoyée par un deuxième dispositif (50), comprenant également l'étape consistant à :

envoyer une deuxième information de commande à un troisième équipement utilisateur (60, 70) pour lequel un signal de référence est configuré sur l'information d'emplacement de ressource dans l'information de configuration de signal de référence, la deuxième information de commande étant utilisée pour indiquer que le troisième équipement utilisateur (60, 70) pour lequel le signal de référence est configuré sur l'information d'emplacement de ressource de signal de référence n'envoie pas le signal de référence.

**8.** Procédé selon l'une quelconque des revendications 5 à 7, dans lequel l'information de configuration de signal de référence comprend également une information de puissance, l'information de puissance étant utilisée pour indiquer une valeur de puissance prédéfinie ou une information de calcul de puissance, la valeur de puissance prédéfinie étant une valeur de puissance prédéfinie du signal de référence, et l'information de calcul de puissance étant une information de calcul prédéfinie utilisée pour déterminer la puissance du signal de référence.

**9.** Appareil de transmission de signal (80), comprenant un émetteur-récepteur (830) et un processeur (810), le processeur (810) étant configuré pour exécuter une instruction, pour mettre en oeuvre un procédé quelconque selon les revendications 1 à 8 en association avec l'émetteur-récepteur (830).

**10.** Support de stockage lisible par ordinateur comprenant un programme informatique, le programme informatique, lorsqu'il s'exécute sur un ordinateur, amenant l'ordinateur à effectuer le procédé selon l'une quelconque des revendications 1 à 8.

FIG. 1

Pattern 1    Pattern 2    Pattern 3

FIG. 2

SRS period (N subframes)

One subframe

One symbol

SRS

FIG. 3

First sending module 42

Fourth sending module 45

Receiving module 41

Second sending module 43

40

Third sending module 44

Signal transmission apparatus

FIG. 4

Sending module 51

Receiving module 52

50

Signal transmission apparatus

FIG. 5

61  62

Receiving module —— Sending module

60

Signal transmission apparatus

FIG. 6

71  72

Receiving module —— Processing module

70

Signal transmission apparatus

FIG. 7

80

810 Processing component    Transceiver    830

820 Memory    Network interface

840

FIG. 8

FIG. 9

**REFERENCES CITED IN THE DESCRIPTION**

**Patent documents cited in the description**

- CN 201610726705
- EP 2950599 A